(19)

Europäisches
Patentamt
European
Patent Office
Office européen
des brevets

(11)　EP 3 807 679 B1

(12)　**EUROPEAN PATENT SPECIFICATION**

(45) Date of publication and mention
of the grant of the patent:
**03.01.2024 Bulletin 2024/01**

(21) Application number: **18768935.1**

(22) Date of filing: **14.06.2018**

(51) International Patent Classification (IPC):
***G01V 99/00*** [(2009.01)]

(52) Cooperative Patent Classification (CPC):
**G01V 99/005**

(86) International application number:
**PCT/IB2018/000911**

(87) International publication number:
**WO 2019/239176 (19.12.2019 Gazette 2019/51)**

(54)　**METHOD FOR DETERMINING THE GEOMETRY OF AN AREA OF A RESERVOIR**

VERFAHREN ZUR BESTIMMUNG DER GEOMETRIE EINES BEREICHS EINES RESERVOIRS

METHOD FOR DETERMINING THE GEOMETRY OF AN AREA OF A RESERVOIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.04.2021 Bulletin 2021/16**

(73) Proprietor: **TotalEnergies OneTech
92400 Courbevoie (FR)**

(72) Inventor: **MASSONNAT, Gérard
64018 Pau Cedex (FR)**

(74) Representative: **Plasseraud IP
66, rue de la Chaussée d'Antin
75440 Paris Cedex 09 (FR)**

(56) References cited:
**WO-A1-2004/095259**

- **SADEGHNEJAD S ET AL: "Analysis of a more realistic well representation during secondary recovery in 3-D continuum models", COMPUTATIONAL GEOSCIENCES, BALTZER SCIENCE PUBLISHERS, BUSSUM, NL, vol. 21, no. 5, 5 April 2017 (2017-04-05), pages 1035-1048, XP036365891, ISSN: 1420-0597, DOI: 10.1007/S10596-017-9640-5 [retrieved on 2017-04-05]**
- **SAEID SADEGHNEJAD ET AL: "Field Scale Characterization of Geological Formations Using Percolation Theory", TRANSPORT IN POROUS MEDIA, vol. 92, no. 2, 1 March 2012 (2012-03-01), pages 357-372, XP055565781, NL ISSN: 0169-3913, DOI: 10.1007/s11242-011-9907-6**
- **Saeid Sadeghnejad ET AL: "Field Scale Characterization of Geological Formations Using Percolation Theory", Transport in Porous Media, vol. 92, no. 2, 1 March 2012 (2012-03-01), pages 357-372, XP055565781, Dordrecht ISSN: 0169-3913, DOI: 10.1007/s11242-011-9907-6**

**Description**

FIELD OF THE INVENTION

The invention relates to a method for determining the geometry of an investigated area of a reservoir, in particular an oil reservoir.

STATE OF THE ART

In the petroleum industry, numerous data acquisition activities are known for broadening the knowledge about an underground reservoir. In particular, it is known to drill one or several wells in the reservoir, and to perform a so called well test to gather data about the connected volume of the reservoir, and to assess the equivalent permeability of the reservoir or specific areas thereof.

Another important step that can be performed before beginning a production phase of the reservoir is a reservoir modelling, which consists of a first determination of the geometry of the reservoir, or of its investigated areas.

To this end, the amount of data that can be provided by the exploration wells is quite limited, and complementary techniques have been developed, including acquisition and processing of seismic data to identify and characterize the various layers of rocks in the soil and the potential geometry of the oil reservoir.

However these techniques are limited as well; for instance seismic data is insufficient to interpret whether a structural trap has been sealed.

A method is also known from document WO2013/144458 which allows precisely modelling a soil's sedimentary facies and mineralogical composition, by simulating the flowing of particles through the soil and the resulting changes in the soil's mineralogical composition. The modelling of the soil obtained by this method can be an additional tool to provide indications regarding the ability of the soil to trap hydrocarbons, and therefore to locate possible parts of the reservoir.

However, an inconvenience of this method is that it is difficult to determine when the current state of the model corresponds to the real state of the soil, and hence when to stop the simulation of particles flowing through the soil.

Another method for determining reservoir characteristics is described in SADEGHNEJAD S ET AL: "Analysis of a more realistic well representation during secondary recovery in 3-D continuum models", COMPUTATIONAL GEOSCIENCES, BALTZER SCIENCE PUBLISHERS, BUSSUM, NL, vol. 21, no. 5, 5 April 2017.

It is therefore necessary to provide an improved solution for determining the geometry of an investigated area of a reservoir.

DESCRIPTION OF THE INVENTION

The present invention aims at providing an improved method for determining the geometry of an investigated area of a reservoir.

To this end, the invention proposes a computer implemented method for determining a geometry of an investigated area of a reservoir, wherein a volume of the investigated area is known, the method comprising:

- receiving a geological model of the soil in which said area is located, the geological model comprising a plurality of adjacent cells each having respective spatial coordinates and respective permeability values, and two wells being simulated in said geological model,
- determining a preferred flowing path between the two wells, the preferred flowing path being formed by a series of adjacent cells of the model, and determined based on the respective permeability values of the cells,
- evaluating a volume of the preferred flowing path and,
- if the volume of the preferred flowing path is lower than the volume of the investigated area, updating the preferred flowing path until its volume is superior or equal to the volume of the investigated area.

According to an embodiment, the updating of the preferred flowing path comprises adding to the current flowing path at least one cell, each added cell being adjacent to at least one cell of the current flowing path and having a permeability value suitable for increasing the permeability of the current flowing path.

In an embodiment, the preferred flowing path is determined by implementing a fast-marching algorithm, which may be configured to maximize the permeability of the preferred flowing path.

In an embodiment, said method is performed after a well testing preliminary phase during which a volume of the investigated area and an equivalent permeability between two wells drilled in the reservoir are determined, and the two wells of the geological model correspond to said two wells of the well testing preliminary phase.

The method may further comprise a step of defining a search zone of the geological model, comprising:

- delimiting a three-dimensional zone in the geological model such that said zone has a volume corresponding to that of the investigated area and the two wells of the geological model are contained within said zone,
- establishing two planes within the geological model, each plane extending vertically and orthogonally to a segment linking the two wells,
- defining the search zone as the part of the three dimensional zone contained within the planes,

wherein the search zone defines the cells that may be included in the preferred flowing path.

In embodiments, the method may further comprise, if the volume of the preferred flowing path is superior or equal to the volume of the investigated area, steps of computing the permeability of the preferred flowing path and comparing said permeability to an equivalent permeability between the wells.

Each cell of the geological model may further comprise at least one local mineralogical composition parameter, and the method may further comprise, if the permeability of the preferred flowing path is different from the equivalent permeability between the two wells, steps of:

- simulating a stochastic movement of a particle in the geological model, said particle having coordinates in said model and having an aggressiveness parameter,
- modifying the local mineralogical composition parameter while taking into account at least :

  ◦ the coordinates of the particle in said model
  ◦ the aggressiveness of the particle and
  ◦ the local mineralogical composition parameter,

- modifying the aggressiveness of the particle while taking into account at least the modification of the local mineralogical composition, and
- computing an updated permeability of the preferred flowing path taking into account the modification of the local mineralogical composition, and
- comparing the updated permeability of the preferred flowing path to the equivalent permeability.

The method may then terminate if the updated permeability reaches the equivalent permeability. Otherwise the method may comprise a step of detecting an error in the geological model if the updated permeability of the preferred flowing path becomes more remote from the equivalent permeability than the initial permeability of the preferred flowing path.

According to another embodiment, a computer program product is disclosed, comprising a set of instructions adapted to implement the method according to the previous description, when it is executed by a processor.

A non-transitory computer readable storage medium is also disclosed, having thereon a computer program comprising program instructions, the computer program being loadable into a processor and adapted to cause the processor to carry out, when the computer program is run by the processor, the method according to the previous description.

A device for determining the geometry of a reservoir is also disclosed, the device comprising a processor configured for implementing the method according to the previous description.

A reservoir characterization method is also disclosed, comprising:

- performing a well test during which a volume of an investigated area of the reservoir and an equivalent permeability between two wells drilled in the reservoir are determined, and
- performing the method according to the preceding description

In an embodiment, the well test comprises:

- causing a pressure disturbance at a first one of the wells drilled in the reservoir,
- measuring a radius of investigation, and
- inferring from said radius of investigation a volume of the investigated area.

In an embodiment the well test may further comprise:

- measuring at the second of the wells drilled in the reservoir a pressure variation in response to the pressure disturbance, and
- inferring from said pressure variation an equivalent permeability value between the two wells.

The present invention makes use of a geological model of the soil in which the reservoir is located, an estimate of the volume of an investigated area of the reservoir, and a value of equivalent permeability between two wells drilled in the reservoir, to infer the geometry of the investigated area. This geometry is obtained by computing a preferred flowing path between the two wells and updating said paths until the equivalent permeability between the wells is reached.

For a better precision of the method, the geological model of the soil may be updated by simulating the flowing of particles between the wells to infer a change in the local mineralogical composition of the soil, and hence a change in the permeability between the wells.

The method also allows relevantly simulating the mineralogical composition of the reservoir.

BRIEF DESCRIPTION OF THE DRAWINGS

Other characteristics and advantages of the invention will become apparent upon reading the following description. This description is purely illustrative and it should be read in conjunction with the attached Figures, which show the following:

- Figures 1a to 1d schematically show the main steps of a method according to an embodiment of the invention.
- Figure 2 is a functional diagram according to one embodiment of the invention,
- Figures 3a and 3b schematically show two successive states of a preferred flowing path between two wells.

- Figure 4 shows an example of a device for evaluating the geometry of a reservoir according to an embodiment of the invention.
- Figure 5 shows an exemplary embodiment of a geological model according to one embodiment of the invention
- Figures 6a to 6c show the phenomenon of changing the mineralogical composition of grid cells of a model according to an embodiment of the invention.

## DETAILED DESCRIPTION OF AT LEAST ONE EMBODIMENT OF THE INVENTION

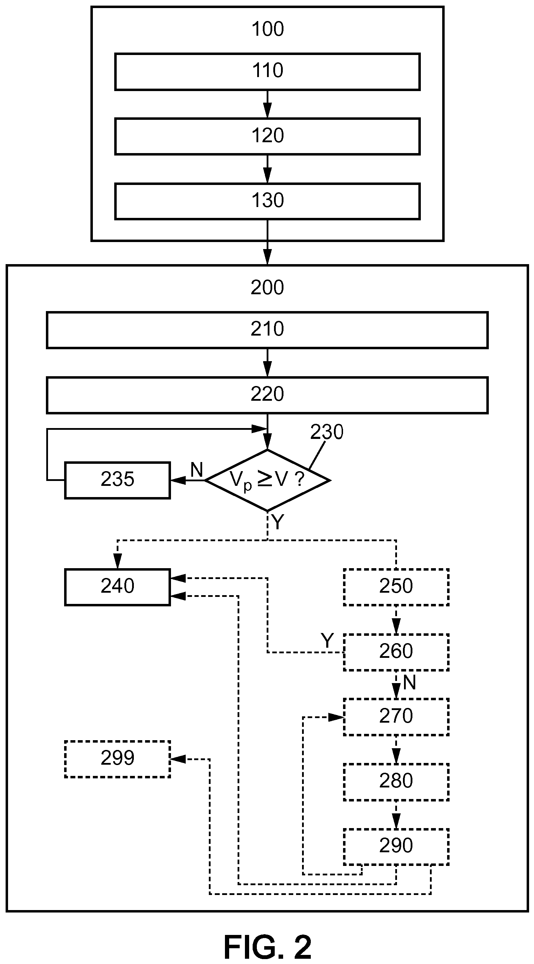

With reference to figure 2, a method for evaluating the geometry of an investigated area of a reservoir is preferably performed after a well test 100 has been operated, in order to evaluate the volume V of the investigated area and the equivalent permeability $K_{eq}$ between two wells P1 and P2 drilled in the reservoir.

The well test comprises a first step 110 of causing a pressure disturbance in the reservoir at a first one P1 of the wells. The pressure disturbance can for example be the injection of a high-pressure fluid into the well.

Accordingly, the pressure disturbance propagates within the reservoir and causes measurable pressure changes in the reservoir.

The radius of investigation, or also known as transient drainage radius, well known by the skilled person, is defined as the maximum distance from the point where a pressure disturbance is caused (i.e. P1), at which a pressure change caused by the pressure disturbance can be measured. In other words, the radius of investigation is the furthest distance at which the effect of the pressure disturbance is detectable.

The radius of investigation $r_{inv}$ is defined by the following equation:

$$r_{inv} = \sqrt{\frac{kt}{948 \cdot \phi \mu c}}$$

Where :

- t is the time elapsed since the pressure disturbance,
- k is the average permeability of the soil,
- $\phi$ is the porosity of the soil,
- c is the compressibility of the soil, and
- $\mu$ is the viscosity of the fluid in which the pressure disturbance propagates.

In order to compute the radius of investigation of the investigated area, the pressure at the well P1 is monitored in order to detect the time at which the pressure value at the well P1 comes back to what it was before the pressure disturbance. The radius of investigation is then computed by applying the above formula to the detected time.

The volume of the investigated area is then estimated during a step 120 by approximating the area as a cylinder having a radius equal to the radius of investigation, and a height estimated from geological data.

Regarding the equivalent permeability $K_{eq}$ between the wells P1 and P2, it can be determined in step 130 by monitoring the pressure change at the well P2 caused by the pressure disturbance, by using the following Darcy equation:

$$K_{eq} = \frac{QL\mu}{S\Delta p}$$

Where:

- $\Delta p$ is the diminution of pressure change between the point where the pressure disturbance is caused, for instance the well P1, and the point where it is measured, for instance the well P2,
- $K_{eq}$ is the equivalent permeability between the two points,
- Q is the flow rate of the fluid flowing between the two points, determined from the injected flow rate,
- L is the distance between the two points, and
- S is the average section of a cylinder of volume V of the investigated area and of length L.

Once the volume V of the investigated area and the equivalent permeability $K_{eq}$ between the wells P1 and P2 have been determined, the method 200 of determining the geometry of the investigated area is performed.

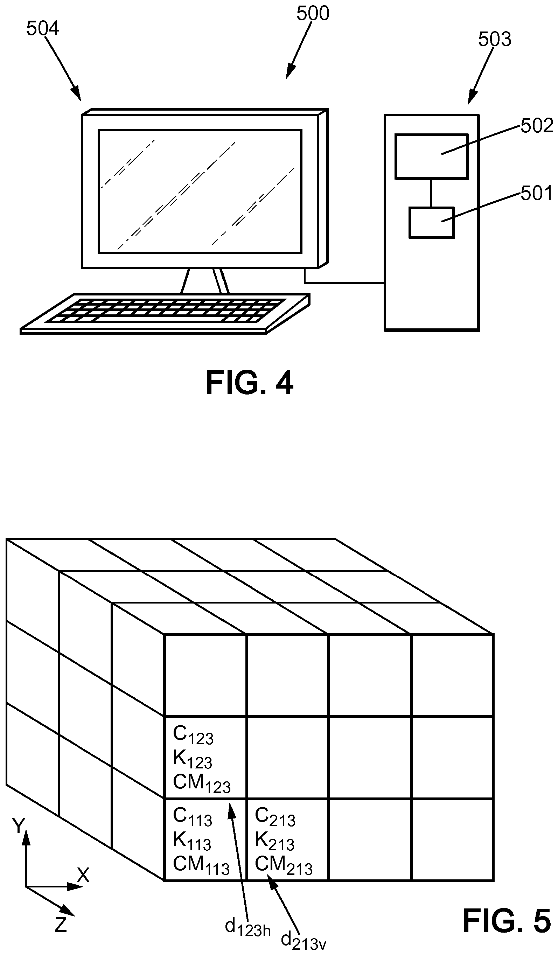

With reference to figure 4, this method is preferably implemented by a device 500 for determining the geometry of an investigated area of a reservoir. In an embodiment, this device comprises a central processing unit 503 which comprises a processor 501 adapted to execute instructions stored in a memory 502 for implementing this method, the memory 502 also storing the geological model. The device 500 can further comprise a human-machine interface 504, comprising for instance a display for displaying information regarding the current state of the geological model and the preferred flowing path, and input means for an operator to enter instructions.

As schematically shown on figure 5, the method 200 of determining the geometry of the investigated area is performed based on a geological model of the soil in which the reservoir is located, said model being loaded by the processing unit at the beginning of the method.

The geological model is a three-dimensional grid comprising a number of cells, each cell C being associated with respective geographical coordinates (x,y,z) and a respective permeability value $K_{xyz}$.

Preferably, each cell of the model is further associated with a mineralogical composition parameter (designated as $CM_{xyz}$). The variables x,y and z indicate the spatial positions of the cells. The term "mineralogical composition parameter" (or simply "mineralogical composition") is understood to mean a parameter representing the ratios of minerals (such as sulfur, galena, cassiterite, fluoride, calcite, colemanite, chalcanthite, legrandite, etc.) within a portion of the soil, but also the ratios of other non-mineral chemical compounds such as molecules (for example $CO_2$, $O_2$, etc.) or ions ($Ca^{2+}$, $HCO_3^-$, etc.).

Furthermore, in the geological model, the two wells P1 and P2 are simulated as vertical axes extending at edges of the model, at locations corresponding to their real respective locations. The method is initialized by simulating a three-dimensional zone, representing the investigated area, said zone being in the shape of a cylinder of volume V centered on the well P1.

The geometry of the investigated area is evaluated by determining a preferred flowing path between the wells P1 and P2. To this end, during a first step 210 a search zone is defined; said search zone defining the cells of the geological model that may be added to the preferred flowing path. Thus, a cell may be added to the preferred flowing path only if it belongs to the search zone.

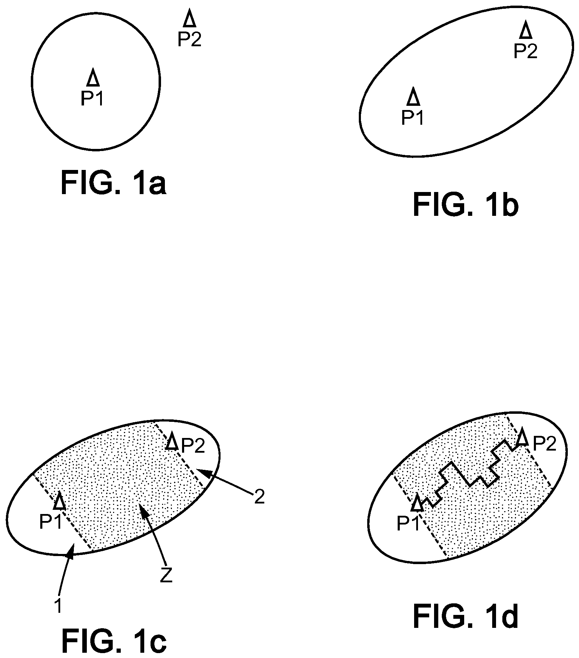

With reference to figure 1b, the definition of the search zone is performed by deforming the three-dimensional zone mentioned above so that it incorporates both wells P1 and P2 and remains of volume V.

With reference to figure 1c, two vertical planes 1 and 2 are defined, each plane being orthogonal to a horizontal segment linking the wells P1 and P2, and the axis representing each well P1, P2 being included in the respective plane 1 and 2.

The search zone Z is defined as the part of the three-dimensional zone that is comprised between the planes P1 and P2.

Back to figure 2, the method then comprises a step 220 of determining a preferred flowing path between the wells P1 and P2. The preferred flowing path is formed by a series of adjacent cells of the geological model that link together the wells P1 and P2, and which maximize the permeability between P1 and P2.

The cells that are part of the preferred flowing path are chosen according to their respective permeability values.

The preferred flowing path may be determined by computing a percolation path or applying a method based on connectivity threshold.

According to a preferred embodiment, the preferred flowing path is determined by implementing a fast-marching algorithm weighted by the permeability values of the cells. The fast-marching algorithm is a well-known method based on the solving of an Eikonal equation as follows:

$$|\nabla u(x)| = \frac{1}{f(x)} \; for \; x \in \Omega$$

$$u(x) = 0 \; for \; x \in \partial\Omega$$

The skilled person may refer to the publication by J.A.Sethian, "A Fast Marching Level Set Method for Monotonically Advancing Fronts", Proc. Natl. Acad. Sci., 93, 4, pp. 1591-1595, 1996 for the detailed implementation of this algorithm.

In the present case, the fast-marching algorithm is applied to the resolution of an equation representing the evolution of a front propagating radially from the well P1. The position of this front is obtained by the computation of directional arrival times, which depend on the distance from the well P1 and the permeabilities that are encountered. The propagation of the front is governed by the following Eikonal propagation equation:

$$\partial_t u(x,t) + c(x)\nabla \cdot \left(\nabla_x u(x,t)\right) = 0$$

$$u(x,t) = T(x) - t$$

Where $u(x,t)$ represents the propagation front, $c(x)$ is the propagation speed of the front and $T(x)$ represents the duration for arriving at location x at the time t. $T(x)$ is obtained by integrating on each volume unit the stationary equation below.

According to a preferred implementation of the fast-marching algorithm, each cell added to the preferred flowing path is selected based on an estimated time for a fluid to reach said cell, starting from the last cell added to the path. This time can be computed according to the distance between the centers of the adjacent cells, the respective permeabilities of the adjacent cells, the viscosity of the fluid, and possibly other parameters. The time can in particular be computed by a numerical method such as finite elements method.

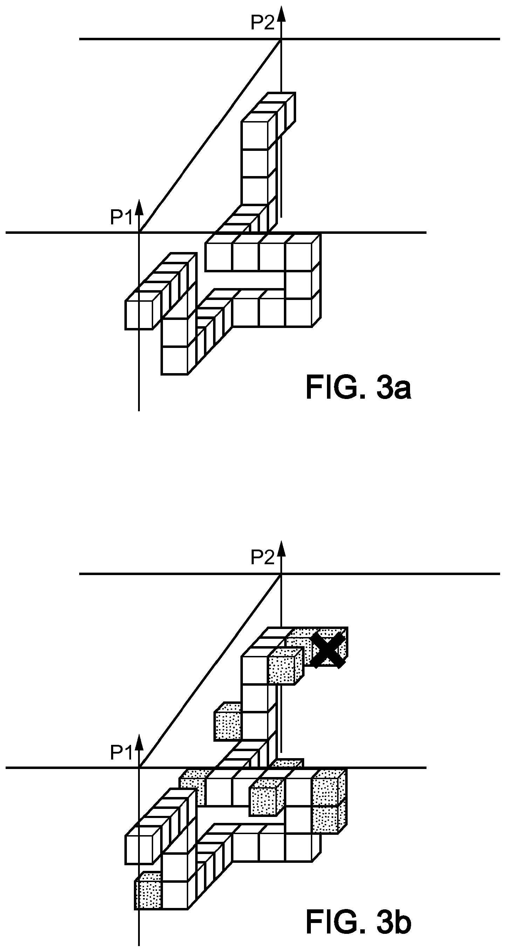

As shown on figures 1d and 3a, at the end of step 220 a preferred flowing path is obtained, linking P1 and P2.

Back to figure 2, during a step 230 the volume $V_p$ of the preferred flowing path, as defined by the sum of the volumes of its cells, is compared to the volume V of the investigated area.

If the volume $V_p$ of the preferred flowing path is less than the volume V, then during a step 235 at least one cell is added to the preferred flowing path.

Referring to figure 3b, each cell added to the preferred flowing path must be adjacent to at least one cell already belonging to the preferred flowing path. As shown with the crossed cell in figure 3b, a cell not neighboring any cell of the preferred flowing path may not be added to the latter.

Moreover, each cell is added according to its permeability value, in order to increase the permeability of the preferred flowing path. In one embodiment, the selected cell is the cell exhibiting the highest permeability value among the cells neighboring the preferred flowing path. According to another embodiment, the selected cell is determined according to both its permeability value and position in the path, as the one increasing most the equivalent permeability between P1 and P2.

In an embodiment, during step 235, a single cell is added to the flowing path.

The step 330 of comparing the volume $V_p$ of the updated preferred flowing path to the volume V is then repeated until the volume $V_p$ of the updated preferred flowing path becomes superior or equal to the volume V, which acts therefore as a threshold.

In an embodiment, when the volume $V_p$ of the updated preferred flowing path becomes superior or equal to the volume V, the process terminates at step 240 and the geometry of the investigated area is determined as being that of the flowing path.

In another embodiment, the process then comprises a step 250 during which the permeability $K_p$ of the preferred flowing path is computed, during a step 250 based on the permeability values of the cells of the flowing path. The computed permeability is then compared during a step 260 to the equivalent permeability $K_{eq}$ between the wells P1 and P2. This comparison allows a tolerance margin. Thus, if the permeability is comprised in the range [Keq-m, Keq+m], where m is the tolerance margin, the method terminates at step 240 and the geometry of the investigated area corresponds to the preferred flowing path.

If the permeability is not comprised in the range indicated above, the method further comprises a step 270 of updating the geological model, by simulating changes in the petrophysical characteristics of soil (in particular through the mineralogical composition of the soil) which result from infiltration of water. These changes are called diagenesis and can be the consequences of phenomena such as dissolution, precipitation or change of lithology, which can be simulated for an improved precision of the reservoir characterization.

In this embodiment, the movement of particles representing water infiltrated in the soil is simulated during step 270 in the geological model.

According to this embodiment, the geological model can further simulate fractures in the soil, and to this end comprises edge parameter values, for example the diameter of conduits d213v (vertical edge between two cells C113 and C213 in Figure 5), d123h (horizontal edge between two nodes N113 and N123), etc. The probability of stochastic movement of a particle in the second environment is calculated while taking into account these conduit diameter values, so as to simulate flow through the fractures.

The particles may be introduced at a given cell, for example C123, or at several cells. The introduction of particles can be performed at predetermined periodic intervals.

In this embodiment, it is assumed that the particles are subjected to two types of movement: "advective movement" and "dispersive movement". "Advective movement" (or, for the latter, "advective direction") is the most likely movement of the particle (or, for the latter, the most likely direction of movement of the particle). For a given cell, the advective movement is likely to take place in one direction and orientation, determined by the hydraulic gradient corresponding to the modeled region based on whether this region is or is not saturated.

In addition, limestone lithologies can be characterized by a reaction index IRij (or dolomitization index IDij in the case of limestone) describing the capacity of their mineralogical compositions to be modified (or respectively the capacity of the limestone to be transformed into dolomite).

One can thus predict that the particles introduced into the model may cause the mineralogical composition parameters of the first model (matrix) to evolve during the course of the simulation. Precipitating elements in significant proportions may cause a change of lithology and thus of the facies of the rock (for example a dolomitization phenomenon), in particular based on the aggressiveness of the particles, the current (or initial) mineralogical composition CMxyz of the matrix, the current reaction index IRxyz, the chemical content of the particle, etc.

The diagenesis of the rock can be also taken into account, namely the type of action of the particles on the rock during their movement. For example, the type of action of the particles on the rock is selected from among the following:

- dissolution, whereby the water dissolves the rock,
- precipitation, whereby the ions dissolved in the water are deposited on the rock,
- change in lithology related to a change (increase or decrease) in the porosity.

Using dissolution as an example, the parameters taken into account can be the following:

- the minerals to be dissolved (chosen for example from a list including limestone, dolomite, limestone dolomite, dolomitic limestone, argillaceous sandstone, and argillaceous limestone, in predefined ratios),
- a maximum porosity value for the matrix and/or a maximum conduit diameter value which can be obtained with dissolution,
- a reactivity index (between 0 and 1), which can be defined for each of the minerals,
- a transformation of the facies, defining the values both before and after dissolution,
- an inhibitor of the dissolution reaction,
- the kinetics of the dissolution reaction (taking into account, for example, factors such as the temperature, activation energy, etc.).

In the case of precipitation, similar parameters can be defined to take into account the particular characteristics of precipitation in the rock in question. For example, the minimum porosity and diameter values can be defined instead of the maximum values defined for dissolution.

In the case of a change in lithology, it is possible to determine for example:

- the mineral to be transformed,
- the mineral created,
- the transformation of the facies, defining the values both before and after the changes in lithology,
- the minimum and maximum rates of change of the mineral,
- inhibitors or kinetics as mentioned above.

These parameters can be defined, where applicable, for either one or for both environments.

In this case, the particle aggressiveness describes the capacity of the particle for transforming the lithology or the chemical composition of the affected rock.

The particles can have variable characteristics, for example depending on their coordinates in the model, the simulation time, the distance traveled by a particle, the type of fluid, etc. In particular, the particle may lose aggressiveness in the case of dissolution, while its aggressiveness may be increased in the case of precipitation.

An example of the stochastic movement simulation model for particles is described in patent application PCT/FR2011/052099.

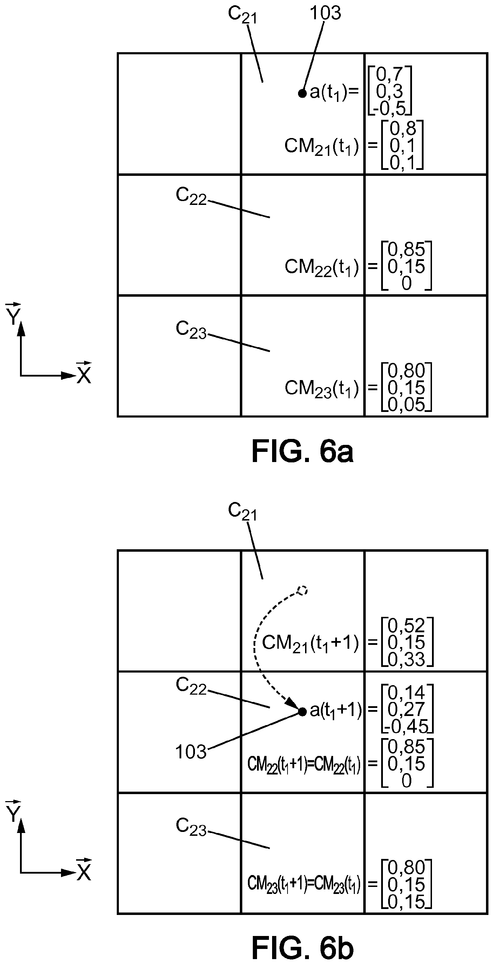

FIGS. 6a to 6c illustrate the phenomenon of modifying the mineralogical composition of cells of a simplified, two-dimensional geological model for the sake of clarity.

In these Figures, in order to simplify the description, it is assumed that the rocks represented in the model are limestone rocks, but other compositions such as shale and sandstone are also possible.

Limestone rocks are readily soluble in water and consist mostly of calcium carbonate ($CaCO_3$). By way of an example, several minerals/rocks which may be included in the composition of a rock are listed below:

- Calcite: a mineral consisting of calcium carbonate ($CaCO_3$), with traces of Mn, Fe, Zn, Co, Ba, Sr, Pb, Mg, Cu, Al, Ni, V, Cr, Mo;
- Dolomite: a mineral consisting of calcium carbonate and magnesium having the chemical formula $CaMg(CO_3)_2$ and with traces of Fe, Mn, Co, Pb, Zn;
- Clay: a sedimentary rock containing at least 50% alumina silicate, to which are added other minerals (quartz, feldspar, calcite, iron oxides).

FIG. 6a shows a two-dimensional gridded geological model at simulation time t. By way of simplification, this model includes 9 cells. This model may for example have been obtained from simulation software by electronic means, via a connection interface (for example a USB interface, an Ethernet interface, or a bus connection to a hard drive).

Each of the cells in this model has a mineralogical composition that is provided and fixed prior to the simulation. The mineralogical composition of cell C21 is indicated as CM21(t), the mineralogical composition of cell C22 is indicated as CM22(t), and the mineralogical composition of cell C23 is indicated as CM23(t). The model is therefore described as having a local mineralogical composition parameter which can depend on the cell in question (i.e. the coordinates of the cell concerned in the model).

At time $t_1$, a particle 103 is present in cell C21 and has an aggressiveness a(t1) (or aggressiveness parameter). The aggressiveness of the particle can be represented by a vector of numeric values, where each numeric value of this vector represents a capacity of the particle for modifying a given mineral. By way of an example, it is assumed that this particle 103 has an aggressiveness vector which is equal to [calcite=0.7; dolomite=0.3; clay=-0.5](or simply [0.7; 0.3; -0.5]). In the present case, this vector indicates that the particle 103 has a high capacity for dissolving calcite (i.e. 0.7), a low capacity for dissolving dolomite (i.e. 0.3), and an average capacity for precipitating clay (i.e. -0.5).

In addition, the mineralogical composition of the cell C21 includes, for example, a large amount of dolomite and a small amount of calcite and clay: it is thus said that the proportions of dolomite, calcite and clay are the components of the mineralogical composition of cell C21. These components can be written down in vector form as [0.8; 0.1; 0.1]=CM21(t). By extension of this concept, the mineralogical composition of the cell can also include chemical compounds which are not explicitly considered to be minerals; for example, the mineralogical composition of a cell may also include molecules (such as $CO_2$, $O_2$, etc.), or ions ($Ca^{2+}$, $HCO_3^{-}$, etc.).

It is possible to simulate the stochastic movement of the particle between times $t_1$ and $t_1+1$, particularly in relation with the methods presented in patent application PCT/FR2011/052099. For simplicity in the examples in FIGS. 6a to 6c, the simulated movement of the particle is considered to be vertical, in direction $-\vec{y}$.

Between times $t_1$ and $t_1+1$, it is also possible to simulate the fact that the presence of the particle in the matrix of cell C21 induces a modification to the mineralogical composition of the cell (or local mineralogical composition parameter). In fact, if the mineralogical composition of the cell includes dolomite and the particle also has the capacity to dissolve dolomite, the ratio of dolomite in the cell will consequently be decreased while the ratio of other minerals will be increased. The same will be true for the precipitation capacity of a given mineral, for which the ratio of the given mineral will be increased.

In the example in FIGS. 6a to 6c, we have $a(t_1)=[0.7; 3; -0.5]$ and $CM21(t_1)=[0.8; 1; 0.1]$. In one embodiment of the simulation, the new ratios for the mineralogical composition (after modification) of the cell can be determined as follows:

- Step 1: intermediate mineralogical composition values are determined by multiplying the old ratio by the corresponding aggressiveness component and by subtracting the result of the old ratio calculation;
- Step 2: once these intermediate values have been determined for each component, each of these intermediate values is divided by the sum of the determined intermediate values.

In the present case, the following result will be obtained in step 1: $[0.8*(1-0.7); 0.1*(1-0.3); 0.1*(1+0.5)]$ which is $[0.24; 0.07; 0.15]$. In addition, the result in step 2 will be

$$\left[\frac{0,24}{0,46}; \frac{0,07}{0,46}; \frac{0,15}{0,46}\right]$$

(because $0.24+0.07+0.15=0.46$) or about $[0.52; 0.15, 0.33]$. Other calculation methods are of course possible. In particular, each of the new components of the mineralogical composition may be a function of a plurality of old mineralogical composition components or of aggressiveness components so as to represent the underlying chemical reactions in more detail.

The aggressiveness of the particle may evolve in response to this change in the mineralogical composition. Indeed, if the particle induces strong calcite dissolution, it is likely that its capacity to dissolve such a mineral will actually be reduced. In an embodiment of the simulation, the new aggressiveness components of the particle (after modification) can be determined by multiplying the old aggressiveness component by the associated ones' complement of the old mineralogical component (i.e. corresponding to the same mineral).

In this case, the following result would be obtained: $[0.7*(1-0.8); 0.3*(1-0.1); -0.5*(1-0.1)]$ which is $[0.14; 0.27; -0.45]$. Other calculation methods are of course possible. In particular, a new aggressiveness component can be a function of a plurality of old aggressiveness components or local mineralogical composition components so as to represent the underlying chemical reactions in more detail.

Indeed, if the aggressiveness of the particle depends on its "ionic" composition (or, in inaccurate terms, its mineralogical composition), for example the concentration of acids or of $Ca^{2+}$ or even of $HCO3^-$), the chemical mechanisms of precipitation or dissolution can cause the mineralogical composition of the particle to evolve and thus change its aggressiveness.

For example, based on the premise that the mineralogical composition of the particle 103 includes a high concentration of $Ca^{2+}$ ions and that the mineralogical composition of cell C21 includes $HCO3^-$ ions in suspension, precipitation of calcium carbonate may occur (which is a frequent situation in aquatic environments, in particular in marine environments). Once the ions have been precipitated, the concentration of $Ca^{2+}$ ions in the particle is decreased and the particle thus loses its "aggressiveness". It should be noted that in the latter case, the aggressiveness of the particle does not depend solely on the particle but also on the environment in which the particle is found: namely cell M21.

Therefore, in FIG. 6b and at time $t_1+1$, the particle 103 is located in cell C22. The aggressiveness of the particle $a(t_1+1)$ at this moment has been modified between times $t_1$ and $t_1+1$ as a function of the modifications introduced into the mineralogical composition of cell C21. The mineralogical composition of other cells (i.e. C22 and C23) was not modified, as no particles were located inside these cells between simulation times $t_1$ and $t_1+1$.

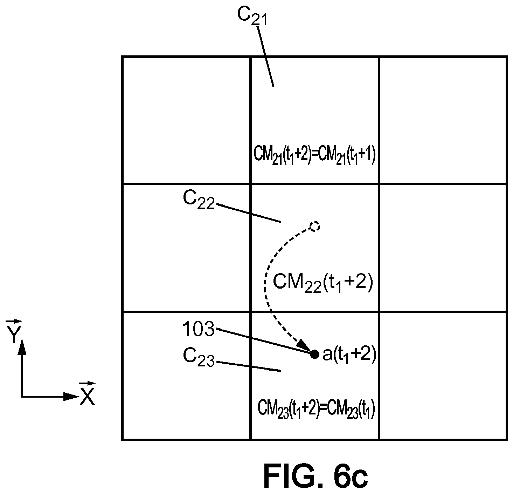

Also, at time $t_1+2$ in FIG. 6c, a repetition of the steps presented above can be carried out. In this manner, between times $t+1$ and $t+2$, the particle 103 moves from cell C22 to cell C23. The aggressiveness $a(t_1+2)$ has been modified between time $t_1+1$ and time $t_1+2$ as a function of the modifications made to the mineralogical composition CM22 of cell C22. The mineralogical composition of other cells (i.e. C21 and C23) is unchanged, as no particles were located inside these cells between simulation times $t_1+1$ and $t_1+2$.

Obviously, although FIGS. 6a through 6c describe the movement of one particle, similar processing can be performed for a plurality of particles, for example 100,000 particles.

Once the movement of one or several particles have been simulated, and the geological model has been updated accordingly, back to figure 2 the method comprises a step 280 of computing the permeability of the preferred flowing path, taking into account the changes in the mineral composition of the cells forming the preferred flowing path, and hence of their respective permeability values.

Then the permeability value is compared to the equivalent permeability between the wells P1 and P2 considered as a threshold, during a step 290.

This means that, if the initial permeability value of the preferred flowing path was below - resp. above - the equivalent permeability, the method terminates at step 240 if the updated permeability value becomes superior or equal to - resp. inferior or equal to - the equivalent permeability.

Otherwise, if the updated permeability value has become closer from the equivalent permeability, while remaining below - resp. above - the latter, then the method comprises another step 270 of updating the preferred flowing path by further simulating movement of particles through the reservoir to induce changes in the mineral composition thereof. The method then repeats until the updated permeability of the flowing path reaches the threshold of the equivalent permeability between the wells.

However if the updated permeability value has become more remote from the equivalent permeability, then an error on the geological model used for the investigated area is detected at step 299.

The flowing path obtained according to the above method has the volume and equivalent permeability that have been determined during a well test. It also takes into account diagenesis simulation for an improved precision in its mineralogical composition.

Furthermore, the method also provides an indicator for stopping diagenesis simulation, said indicator being the equivalent permeability of the preferred flowing path.

Last, it also provides an indicator of the reliability of the geological model that is used for performing diagenesis.

**Claims**

1. A computer implemented method (200) for determining a geometry of an investigated area of a reservoir, wherein a volume (V) of the investigated area is known, the method comprising :

    - receiving a geological model of the soil in which said area is located, the geological model comprising a plurality of adjacent cells each having respective spatial coordinates and respective permeability values, and two wells being simulated in said geological model,
    - determining (220) a preferred flowing path between the two wells, the preferred flowing path being formed by a series of adjacent cells of the model, and determined based on the respective permeability values of the cells,
    - evaluating (230) a volume ($V_p$) of the preferred flowing path and,
    - if the volume ($V_p$) of the preferred flowing path is lower than the volume (V) of the investigated area, updating (235) the preferred flowing path until its volume ($V_p$) is superior or equal to the volume (V) of the investigated area.

2. A computer implemented method according to claim 1, wherein the updating (235) of the preferred flowing path comprises adding to the current flowing path at least one cell, each added cell being adjacent to at least one cell of the current flowing path and having a permeability value suitable for increasing the permeability of the current flowing path.

3. A computer implemented method according to claim 1 or 2, wherein the preferred flowing path is determined by implementing a fast-marching algorithm.

4. The computer implemented method according to claim 3, wherein the fast-marching algorithm is configured to maximize the permeability ($K_p$) of the preferred flowing path.

5. The computer implemented method according to any of claims 1 to 4, said method is performed after a well testing preliminary phase (100) during which a volume (V) of the investigated area and an equivalent permeability ($K_{eq}$) between two wells drilled in the reservoir are determined (120, 130), and wherein the two wells of the geological model correspond to said two wells of the well testing preliminary phase.

6. The computer implemented method according to claim 5, further comprising a step of defining a search zone (210) of the geological model, comprising :

    - delimiting a three-dimensional zone in the geological model such that said zone has a volume corresponding to that of the investigated area and the two wells of the geological model are contained within said zone,
    - establishing two planes within the geological model, each plane extending vertically and orthogonally to a segment linking the two wells,
    - defining the search zone as the part of the three dimensional zone contained within the planes,

    wherein the search zone defines the cells that may be included in the preferred flowing path.

7. The computer implemented method according to any of the preceding claims, further comprising, if the volume ($V_p$) of the preferred flowing path is superior or equal to the volume of the investigated area (V), steps of computing (250) the permeability of the preferred flowing path ($K_p$) and comparing (260) said permeability to an equivalent permeability ($K_{eq}$) between the wells.

8. The computer implemented method according to claim 7, wherein each cell of the geological model further comprises at least one local mineralogical composition parameter, and the method further comprises, if the permeability ($K_p$) of the preferred flowing path is different from the equivalent permeability ($K_{eq}$) between the two wells, steps of:

    - simulating (270) a stochastic movement of a particle in the geological model, said particle having coordinates in said model and having an aggressiveness parameter,
    - modifying (270) the local mineralogical composition parameter while taking into account at least :

        ∘ the coordinates of the particle in said model

○ the aggressiveness of the particle and
○ the local mineralogical composition parameter,

- modifying (270) the aggressiveness of the particle while taking into account at least the modification of the local mineralogical composition, and
- computing (280) an updated permeability ($K_p$) of the preferred flowing path taking into account the modification of the local mineralogical composition, and
- comparing (290) the updated permeability ($K_p$) of the preferred flowing path to the equivalent permeability ($K_{eq}$).

9. The computer implemented method according to claim 8, further comprising a step of terminating (240) the method if the updated permeability reaches the equivalent permeability.

10. The computer implemented method according to claim 8, further comprising a step of detecting an error (299) in the geological model if the updated permeability of the preferred flowing path becomes more remote from the equivalent permeability than the initial permeability of the preferred flowing path.

11. A computer program product, comprising a set of instructions adapted to implement the method according to any of the preceding claims, when it is executed by a processor.

12. A non-transitory computer readable storage medium (502), having thereon a computer program comprising program instructions, the computer program being loadable into a processor (501) and adapted to cause the processor (501) to carry out, when the computer program is run by the processor, the method according to any of claims 1 to 10.

13. A device (500) for determining the geometry of a reservoir, the device comprising a processor (502) configured for implementing the method according to any of claims 1 to 10.

14. A reservoir characterization method, comprising :

- performing a well test (100) during which a volume of an investigated area of the reservoir and an equivalent permeability between two wells drilled in the reservoir are determined, and
- performing the method (200) according to one of claims 1 to 10.

15. A reservoir characterization method according to claim 14, wherein the well test comprises :

- causing a pressure disturbance (110) at a first one of the wells drilled in the reservoir,
- measuring a radius of investigation, and
- inferring (120) from said radius of investigation a volume of the investigated area.

16. A reservoir characterization method according to claim 15, wherein the well test further comprises :

- measuring at the second of the wells drilled in the reservoir a pressure variation in response to the pressure disturbance, and
- inferring (130) from said pressure variation an equivalent permeability value between the two wells.

**Patentansprüche**

1. Computer-implementiertes Verfahren (200) zum Bestimmen einer Geometrie eines untersuchten Bereichs eines Reservoirs, wobei ein Volumen (V) des untersuchten Bereichs bekannt ist, wobei das Verfahren umfasst:

- Erhalten eines geologischen Modells des Bodens, in welchem der Bereich angeordnet ist, wobei das geologische Modell eine Mehrzahl von benachbarten Zellen, welche jeweils entsprechende räumliche Koordinaten und entsprechende Permeabilitätswerte aufweisen, und zwei in dem geologischen Modell simulierte Bohrungen umfasst,
- Bestimmen (220) eines bevorzugten Strömungspfades zwischen den zwei Bohrungen, wobei der bevorzugte Strömungspfad durch eine Reihe von benachbarten Zellen des Modells gebildet wird und auf Grundlage der entsprechenden Permeabilitätswerte der Zellen bestimmt wird,
- Evaluieren (230) eines Volumens ($V_p$) des bevorzugten Strömungspfades, und
- wenn das Volumen ($V_p$) des bevorzugten Strömungspfades geringer als das Volumen (V) des untersuchten Bereichs ist, Aktualisieren (235) des bevorzugten Strömungspfades bis sein Volumen ($V_p$) größer als oder gleich wie das Volumen (V) des untersuchten Bereichs ist.

2. Computer-implementiertes Verfahren nach Anspruch 1, wobei das Aktualisieren (235) des bevorzugten Strömungspfades ein Hinzufügen wenigstens einer Zelle zu dem aktuellen Strömungspfad umfasst, wobei jede hinzugefügte Zelle benachbart zu wenigstens einer Zelle des aktuellen Strömungspfades ist und einen Permeabilitätswert aufweist, welcher dazu geeignet ist, die Permeabilität des aktuellen Strömungspfades zu erhöhen.

**3.** Computer-implementiertes Verfahren nach Anspruch 1 oder 2, wobei der bevorzugte Strömungspfad durch Implementieren eines schnell ablaufenden Algorithmus bestimmt wird.

**4.** Computer-implementiertes Verfahren nach Anspruch 3, wobei der schnell ablaufende Algorithmus dazu eingerichtet ist, die Permeabilität ($K_p$) des bevorzugten Strömungspfades zu maximieren.

**5.** Computer-implementiertes Verfahren nach einem der Ansprüche 1 bis 4, wobei das Verfahren nach einer vorläufigen Phase (100) eines Bohrungsprüfens durchgeführt wird, während welcher ein Volumen (V) des untersuchten Bereichs und einer äquivalenten Permeabilität ($K_{eq}$) zwischen zwei in dem Reservoir gebohrten Bohrungen bestimmt werden (120, 130), und wobei die zwei Bohrungen des geologischen Modells den zwei Bohrungen der vorläufigen Phase eines Bohrungsprüfens entsprechen.

**6.** Computer-implementiertes Verfahren nach Anspruch 5, ferner umfassend einen Schritt eines Definierens einer Suchzone (210) des geologischen Modells, umfassend:

- Abgrenzen einer dreidimensionalen Zone in dem geologischen Modell, sodass die Zone ein Volumen aufweist, welches dem des untersuchten Bereichs entspricht, und die zwei Bohrungen des geologischen Modells in der Zone enthalten sind,
- Festlegen zweier Ebenen in dem geologischen Modell, wobei sich jede Ebene vertikal und orthogonal auf ein Segment erstreckt, welches die zwei Bohrungen verbindet,
- Definieren der Suchzone als den Teil der dreidimensionalen Zone, welcher in den Ebenen enthalten ist,

wobei die Suchzone die Zellen definiert, welche in dem bevorzugten Strömungspfad umfasst sein können.

**7.** Computer-implementiertes Verfahren nach einem der vorhergehenden Ansprüche, ferner umfassend, wenn das Volumen ($V_p$) des bevorzugten Strömungspfades größer als oder gleich wie das Volumen des untersuchten Bereichs (V) ist, Schritte eines Berechnens (250) der Permeabilität des bevorzugten Strömungspfades ($K_p$) und eines Vergleichens (260) der Permeabilität mit einer äquivalenten Permeabilität ($K_{eq}$) zwischen den Bohrungen.

**8.** Computer-implementiertes Verfahren nach Anspruch 7, wobei jede Zelle des geologischen Modells ferner wenigstens einen lokalen mineralogischen Zusammensetzungsparameter umfasst,

und das Verfahren, wenn sich die Permeabilität ($K_p$) des bevorzugten Strömungspfades von der äquivalenten Permeabilität ($K_{eq}$) zwischen den beiden Bohrungen unterscheidet, ferner folgende Schritte umfasst:

- Simulieren (270) einer stochastischen Bewegung eines Partikels in dem geologischen Modell, wobei der Partikel in dem Modell Koordinaten aufweist und einen Angriffsfähigkeitsparameter aufweist,
- Modifizieren (270) des lokalen mineralogischen Zusammensetzungsparameters, während wenigstens folgendes berücksichtig wird:

  - die Koordinaten des Partikels in dem Model
  - der Angriffsfähigkeitsparameter des Partikels, und
  - der lokale mineralogische Zusammensetzungsparameter,

- Modifizieren (270) des Angriffsfähigkeitsparameters des Partikels, während wenigstens die Modifizierung des lokalen mineralogischen Zusammensetzungsparameters berücksichtig wird, und
- Berechnen (280) einer aktualisierten Permeabilität ($K_p$) des bevorzugten Strömungspfades unter Berücksichtigung der Modifizierung des lokalen mineralogischen Zusammensetzungsparameters, und
- Vergleichen (290) der aktualisierten Permeabilität ($K_p$) des bevorzugten Strömungspfades mit der äquivalenten Permeabilität ($K_{eq}$).

**9.** Computer-implementiertes Verfahren nach Anspruch 8, ferner umfassend einen Schritt eines Beendens (240) des Verfahrens, wenn die aktualisierte Permeabilität die äquivalente Permeabilität erreicht.

**10.** Computer-implementiertes Verfahren nach Anspruch 8, ferner umfassend einen Schritt eines Detektierens eines Fehlers (299) in dem geologischen Modell, wenn sich die aktualisierte Permeabilität des bevorzugten Strömungspfades weiter von der äquivalenten Permeabilität entfernt als die initiale Permeabilität des bevorzugten Strömungspfades.

**11.** Computerprogrammprodukt, umfassend einen Satz von Anweisungen, welche dazu angepasst sind, das Verfahren nach einem der vorhergehenden Ansprüche zu implementieren, wenn es durch einen Prozessor ausgeführt wird.

**12.** Nicht-transitorisches computerlesbares Speichermedium (502), welches darauf ein Programmanweisungen umfassendes Computerprogramm aufweist, wobei das Computerprogramm in einen Prozessor (501) ladbar ist und dazu angepasst ist, den Prozessor (501) zu veranlassen, das Verfahren nach einem der Ansprüche 1 bis 10 durchzuführen, wenn das Computerprogramm durch den Prozessor ausgeführt wird.

13. Vorrichtung (500) zum Bestimmen der Geometrie eines Reservoirs, wobei die Vorrichtung einen Prozessor (502) umfasst, welcher dazu eingerichtet ist, das Verfahren nach einem der Ansprüche 1 bis 10 zu implementieren.

14. Reservoir-Charakterisierungsverfahren, umfassend:

- Durchführen einer Bohrungsprüfung (100), während welcher ein Volumen eines untersuchten Bereichs des Reservoirs und eine äquivalente Permeabilität zwischen zwei in dem Reservoir gebohrten Bohrungen bestimmt werden, und
- Durchführen des Verfahrens (200) nach einem der Ansprüche 1 bis 10.

15. Reservoir-Charakterisierungsverfahren nach Anspruch 14, wobei die Bohrungsprüfung umfasst:

- Veranlassen einer Druckbeeinträchtigung (110) an einer ersten aus den in dem Reservoir gebohrten Bohrungen,
- Messen eines Untersuchungsradius, und
- Ableiten (120) eines Volumens des untersuchten Bereichs aus dem Untersuchungsradius.

16. Reservoir-Charakterisierungsverfahren nach Anspruch 15, wobei die Bohrungsprüfung ferner umfasst:

- Messen einer Druckvariation an der zweiten aus den in dem Reservoir gebohrten Bohrungen als Reaktion auf die Druckbeeinträchtigung, und
- Ableiten (130) eines äquivalenten Permeabilitätswertes zwischen den zwei Bohrungen aus der Druckvariation.

**Revendications**

1. Procédé mis en oeuvre par ordinateur (200) pour la détermination d'une géométrie d'une zone étudiée d'un réservoir, dans lequel un volume (V) de la zone étudiée est connu, le procédé comprenant :

- la réception d'un modèle géologique du sol dans lequel ladite zone est située, le modèle géologique comprenant une pluralité de cellules adjacentes ayant chacune des coordonnées spatiales respectives et des valeurs de perméabilité respectives, et deux puits étant simulés dans ledit modèle géologique,
- la détermination (220) d'un trajet d'écoulement préféré entre les deux puits, le trajet d'écoulement préféré étant formé par une série de cellules adjacentes du modèle, et déterminé sur la base des valeurs de perméabilité respectives des cellules,
- l'évaluation (230) d'un volume ($V_p$) du trajet d'écoulement préféré et,
- si le volume ($V_p$) du trajet d'écoulement préféré est inférieur au volume (V) de la zone étudiée, la mise à jour (235) du trajet d'écoulement préféré jusqu'à ce que son volume ($V_p$) soit supérieur ou égal au volume (V) de la zone étudiée.

2. Procédé mis en oeuvre par ordinateur selon la revendication 1, dans lequel la mise à jour (235) du trajet d'écoulement préféré comprend l'ajout, au trajet d'écoulement actuel, d'au moins une cellule, chaque cellule ajoutée étant adjacente à au moins une cellule du trajet d'écoulement actuel et ayant une valeur de perméabilité appropriée pour augmenter la perméabilité du trajet d'écoulement actuel.

3. Procédé mis en oeuvre par ordinateur selon la revendication 1 ou 2, dans lequel le trajet d'écoulement préféré est déterminé par la mise en oeuvre d'un algorithme de marche rapide.

4. Procédé mis en oeuvre par ordinateur selon la revendication 3, dans lequel l'algorithme de marche rapide est configuré pour maximiser la perméabilité ($K_p$) du trajet d'écoulement préféré.

5. Procédé mis en oeuvre par ordinateur selon l'une quelconque des revendications 1 à 4, ledit procédé est réalisé après une phase préliminaire de test de puits (100) au cours de laquelle un volume (V) de la zone étudiée et une perméabilité équivalente ($K_{eq}$) entre deux puits forés dans le réservoir sont déterminés (120, 130), et dans lequel les deux puits du modèle géologique correspondent auxdits deux puits de la phase préliminaire de test de puits.

6. Procédé mis en oeuvre par ordinateur selon la revendication 5, comprenant en outre une étape de définition d'une zone de recherche (210) du modèle géologique, comprenant :

- la délimitation d'une zone tridimensionnelle dans le modèle géologique de sorte que ladite zone possède un volume correspondant à celui de la zone étudiée et que les deux puits du modèle géologique soient contenus au sein de ladite zone,
- l'établissement de deux plans au sein du modèle géologique, chaque plan s'étendant verticalement et orthogonalement à un segment reliant les deux puits,
- la définition de la zone de recherche comme étant la partie de la zone tridimensionnelle contenue au sein des plans,

dans lequel la zone de recherche définit les cellules qui peuvent être incluses dans le trajet d'écoulement préféré.

7. Procédé mis en oeuvre par ordinateur selon l'une quelconque des revendications précédentes, comprenant en outre, si le volume $(V_p)$ du trajet d'écoulement préféré est supérieur ou égal au volume de la zone étudiée $(V)$, les étapes du calcul (250) de la perméabilité du trajet d'écoulement préféré $(K_p)$ et de la comparaison (260) de ladite perméabilité avec une perméabilité équivalente $(K_{eq})$ entre les puits.

8. Procédé mis en oeuvre par ordinateur selon la revendication 7, dans lequel chaque cellule du modèle géologique comprend en outre au moins un paramètre de composition minéralogique locale, et le procédé comprend en outre, si la perméabilité $(K_p)$ du trajet d'écoulement préféré est différente de la perméabilité équivalente $(K_{eq})$ entre les deux puits, les étapes de :

- la simulation (270) d'un mouvement stochastique d'une particule dans le modèle géologique, ladite particule ayant des coordonnées dans ledit modèle et ayant un paramètre d'agressivité,
- la modification (270) du paramètre de composition minéralogique locale tout en prenant en compte au moins :

  ○ les coordonnées de la particule dans ledit modèle
  ○ l'agressivité de la particule et
  ○ le paramètre de composition minéralogique locale,

- la modification (270) de l'agressivité de la particule tout en prenant en compte au moins la modification de la composition minéralogique locale, et
- le calcul (280) d'une perméabilité $(K_p)$ mise à jour du trajet d'écoulement préféré prenant en compte la modification de la composition minéralogique locale, et
- la comparaison (290) de la perméabilité $(K_p)$ mise à jour du trajet d'écoulement préféré avec la perméabilité équivalente $(K_{eq})$.

9. Procédé mis en oeuvre par ordinateur selon la revendication 8, comprenant en outre une étape de terminaison (240) du procédé si la perméabilité mise à jour atteint la perméabilité équivalente.

10. Procédé mis en oeuvre par ordinateur selon la revendication 8, comprenant en outre une étape de détection d'une erreur (299) dans le modèle géologique si la perméabilité mise à jour du trajet d'écoulement préféré devient plus distante de la perméabilité équivalente que la perméabilité initiale du trajet d'écoulement préféré.

11. Produit programme d'ordinateur, comprenant un jeu d'instructions adapté pour mettre en oeuvre le procédé selon l'une quelconque des revendications précédentes, lors de son exécution par un processeur.

12. Support de stockage non transitoire lisible par ordinateur (502), ayant, sur celuici, un programme d'ordinateur comprenant des instructions de programme, le programme d'ordinateur étant apte à être chargé dans un processeur (501) et adapté pour amener le processeur (501) à effectuer, lorsque le programme d'ordinateur est mis en fonctionnement par le processeur, le procédé selon l'une quelconque des revendications 1 à 10.

13. Dispositif (500) pour la détermination de la géométrie d'un réservoir, le dispositif comprenant un processeur (502) configuré pour la mise en oeuvre du procédé selon l'une quelconque des revendications 1 à 10.

14. Procédé de caractérisation de réservoir, comprenant :

- la réalisation d'un test de puits (100) au cours duquel un volume d'une zone étudiée du réservoir et une perméabilité équivalente entre deux puits forés dans le réservoir sont déterminés, et
- la réalisation du procédé (200) selon l'une des revendications 1 à 10.

15. Procédé de caractérisation de réservoir selon la revendication 14, dans lequel le test de puits comprend :

- la provocation d'une perturbation de pression (110) au niveau d'un premier puits parmi les puits forés dans le réservoir,
- la mesure d'un rayon d'étude, et
- la déduction (120), à partir dudit rayon d'étude, d'un volume de la zone étudiée.

16. Procédé de caractérisation de réservoir selon la revendication 15, dans lequel le test de puits comprend en outre :

- la mesure, au niveau du deuxième puits parmi les puits forés dans le réservoir, d'une variation de pression en réponse à la perturbation de pression, et

- la déduction (130), à partir de ladite variation de pression, d'une valeur de perméabilité équivalente entre les deux puits.

**FIG. 1a**

**FIG. 1b**

**FIG. 1c**

**FIG. 1d**

FIG. 2

FIG. 3a

FIG. 3b

**FIG. 4**

$C_{123}$
$K_{123}$
$CM_{123}$

$C_{113}$
$K_{113}$
$CM_{113}$

$C_{213}$
$K_{213}$
$CM_{213}$

$d_{123h}$  $d_{213v}$

**FIG. 5**

$C_{21}$     103

$$a(t_1)=\begin{bmatrix}0{,}7\\0{,}3\\-0{,}5\end{bmatrix}$$

$$CM_{21}(t_1)=\begin{bmatrix}0{,}8\\0{,}1\\0{,}1\end{bmatrix}$$

$C_{22}$

$$CM_{22}(t_1)=\begin{bmatrix}0{,}85\\0{,}15\\0\end{bmatrix}$$

$\vec{Y}$

$\vec{X}$

$C_{23}$

$$CM_{23}(t_1)=\begin{bmatrix}0{,}80\\0{,}15\\0{,}05\end{bmatrix}$$

## FIG. 6a

$C_{21}$

$$CM_{21}(t_1+1)=\begin{bmatrix}0{,}52\\0{,}15\\0{,}33\end{bmatrix}$$

$C_{22}$

$$a(t_1+1)=\begin{bmatrix}0{,}14\\0{,}27\\-0{,}45\end{bmatrix}$$

103

$$CM_{22}(t_1+1)=CM_{22}(t_1)=\begin{bmatrix}0{,}85\\0{,}15\\0\end{bmatrix}$$

$\vec{Y}$

$\vec{X}$

$C_{23}$

$$CM_{23}(t_1+1)=CM_{23}(t_1)=\begin{bmatrix}0{,}80\\0{,}15\\0{,}15\end{bmatrix}$$

## FIG. 6b

FIG. 6c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013144458 A

- FR 2011052099 W

**Non-patent literature cited in the description**

- Analysis of a more realistic well representation during secondary recovery in 3-D continuum models. **SADEGHNEJAD S et al.** COMPUTATIONAL GEOSCIENCES. BALTZER SCIENCE PUBLISHERS, 05 April 2017, vol. 21

- **J.A.SETHIAN.** A Fast Marching Level Set Method for Monotonically Advancing Fronts. *Proc. Natl. Acad. Sci.,* 1996, vol. 93 (4), 1591-1595